# EUROPEAN PATENT SPECIFICATION

(11) **EP 3 226 435 B1**
(45) Date of publication and mention of the grant of the patent: **18.12.2019**
(21) Application number: 17167474.0
(22) Date of filing: 01.03.2013
(51) Int. Cl.: H04B 7/00, H04L 1/00, H04W 74/08, H04L 1/16

(54) **SYSTEM AND METHOD FOR UPLINK TRANSMISSION IN A WIRELESS NETWORK**
SYSTEM UND VERFAHREN FÜR UPLINK-ÜBERTRAGUNG IN EINEM DRAHTLOSEN NETZWERK
SYSTÈME ET PROCÉDÉ DE TRANSMISSION DE LIAISON MONTANTE DANS UN RÉSEAU SANS FIL

(30) Priority: 02.03.2012 US 201261606206 P; 12.04.2012 US 201261623364 P
(43) Date of publication of application: 04.10.2017
(62) Divisional of application: 13755729.4
(73) Proprietor: Huawei Technologies Co., Ltd., Longgang District Shenzhen, Guangdong 518129 (CN)
(72) Inventor: KWON, Young, Hoon, San Diego, California 92129 (US); YANG, Yunsong, Shenzhen, Guangdong (CN); RONG, Zhigang, San Diego, California 92129 (US)
(74) Representative: Kreuz, Georg Maria

(56) References cited:
- US-A1- 2009 109 938
- YONG LIU (MARVELL): "short-cts ; 11-12-0643-00-00ah-short-cts", IEEE DRAFT; 11-12-0643-00-00AH-SHORT-CTS, IEEE-SA MENTOR, PISCATAWAY, NJ USA, vol. 802.11ah, 14 May 2012 (2012-05-14), pages 1-10, XP017671854,
- YONG LIU (MARVELL): "short-ack ; 11-12-0324-00-00ah-short-ack", IEEE DRAFT; 11-12-0324-00-00AH-SHORT-ACK, IEEE-SA MENTOR, PISCATAWAY, NJ USA, vol. 802.11ah, 13 March 2012 (2012-03-13), pages 1-15, XP017672407, [retrieved on 2012-03-13]
- LAURENT CARIOU (ORANGE): "Short ACK ; 11-12-0109-00-00ah-short-ack", IEEE DRAFT; 11-12-0109-00-00AH-SHORT-ACK, IEEE-SA MENTOR, PISCATAWAY, NJ USA, vol. 802.11ah, 16 January 2012 (2012-01-16), pages 1-13, XP017672832,
- GEORGE CALCEV (HUAWEI): "Considerations on short packet transmission overhead ; 11-11-1254-00-00ah-considerations-on-short -packet-transmission-overhead", IEEE SA MENTOR; 11-11-1254-00-00AH-CONSIDERATIONS-ON-SHORT -PACKET-TRANSMISSION-OVERHEAD, IEEE-SA MENTOR, PISCATAWAY, NJ USA, vol. 802.11ah, 19 September 2011 (2011-09-19), pages 1-8, XP068037389,
- LV KAIYING (ZTE CORPORATION): "MAC header design for small data packet for 802.11ah ; 11-12-0094-03-00ah-mac-header-design-for-s mall-data-packet-for-802-11ah", IEEE SA MENTOR; 11-12-0094-03-00AH-MAC-HEADER-DESIGN-FOR-S MALL-DATA-PACKET-FOR-802-11AH, IEEE-SA MENTOR, PISCATAWAY, NJ USA, vol. 802.11ah, no. 3, 18 January 2012 (2012-01-18), pages 1-11, XP068038187,

## Description

### TECHNICAL FIELD

The present invention relates to a system and method for wireless communications, and, in particular, to a system and method for uplink transmission in a wireless network.

### BACKGROUND

Currently IEEE 802.11ah defines a local area network protocol especially for sub 1 GHz carrier frequencies. The main requirements of IEEE 802.11 ah include: a longer coverage area (e.g., up to 1km), a physical (PHY) layer data rate of at least 100 kbps, a maximum aggregate multi-station data rate of 20Mbps, the use of orthogonal frequency division multiplexing (OFDM) PHY modulation, and support a number of associations beyond 2007 for outdoor applications.

However, as the coverage and the number of associations increase there is a greater chance of a hidden node problems. For example, even though two stations are under the coverage of a single access point, and both stations can receive properly when the access point transmits, it is possible that one station does not receive properly when the other station transmits due to a longer distance between the two stations. Thus, it is possible that both stations transmit uplink data at the same time, simply because the other station considers the medium to be idle when the station transmits its data.

To prevent this collision from happening, IEEE 802.11 defines a request to send (RTS)/clear to send (CTS) process. The station first broadcasts an RTS packet indicating that the station will send the packet to the specified access point for a specified duration. After receiving the RTS packet, the access point also broadcasts a CTS packet to confirm the station's packet transmission. All other stations receiving either RTS or CTS packets will know not to transmit their packets until the end of indicated duration. By following this procedure, collision may be avoided.

The patent document US 2009/109938 discloses a legacy MAC CTS format (figure 6B) and a shortened CTS MAC format (figure 7B), the latter only including the "duration" field. This document also discloses a shortened RTS frame in figure 7A. As indicated in paragraph 0040, the MAC frames are assumed to be preceded by the conventional physical preamble (STF,LTF,SIG) of IEEE 802.11x standards.

The IEEE draft "Short ACK ; 11-12-0109-00-00ah-short-ack", discloses a short ACK format for IEEE 802.11x which has been reduced to the long training field (L-STF).

### SUMMARY

The present invention relates to a method a corresponding apparatus and computer program for communicating in a wireless network, according to the accompanying claims.

### BRIEF DESCRIPTION OF THE DRAWINGS

For a more complete understanding of the present invention, and the advantages thereof, reference is now made to the following descriptions taken in conjunction with the accompanying drawing, in which:
Figure 1 illustrates an uplink collision between two stations;
Figure 2 illustrates an RTS packet and a CTS packet;
Figure 3 illustrates an embodiment system for uplink transmission in a wireless network;
Figure 4 illustrates an embodiment packet format;
Figure 5 illustrates an embodiment method of uplink data transmission by a station;
Figure 6 illustrates an embodiment method of uplink data transmission by an access point;
Figure 7 illustrates an embodiment method of selecting a partial BSSID;
Figure 8 illustrates an embodiment method for uplink transmission in a wireless network;
Figure 9 illustrates another embodiment method for uplink transmission in a wireless network;
Figure 10 illustrates yet another embodiment method for uplink transmission in a wireless network;
Figure 11 illustrates an additional embodiment method for uplink transmission in a wireless network; and
Figure 12 illustrates a block diagram illustrating a computing platform that may be used for implementing, for example, the devices and methods described herein, in accordance with an embodiment.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION OF ILLUSTRATIVE EMBODIMENTS

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

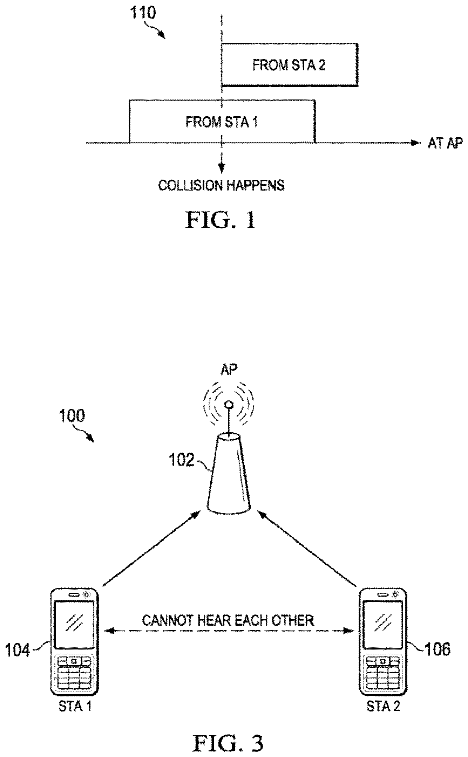

When two stations are both within range of a single access point, but the two stations are not within range of each other, collisions can occur. Figure 1 illustrates an uplink collision 110 between two stations covered by an access point. Station 1 and Station 2 are both within range of a single access point, but they are not in range of each other. Thus, there is a possibility that both stations would transmit uplink data to the access point at the same time, because each station does not know about the presence of the other station.

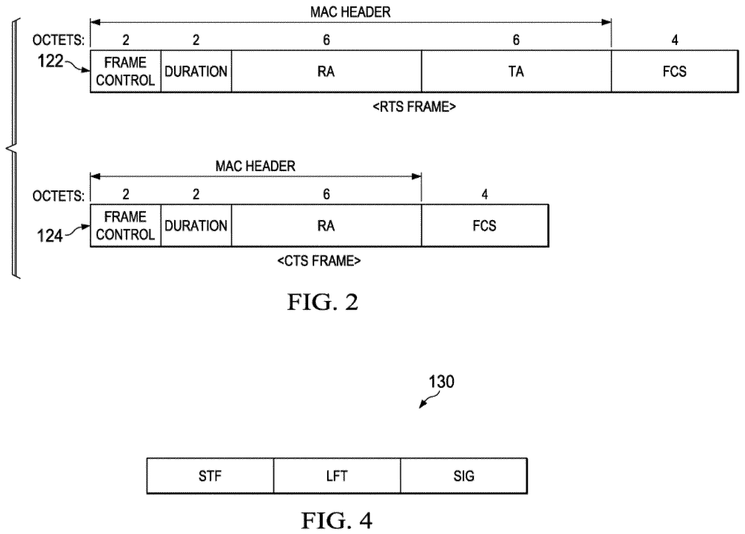

Figure 2 illustrates a request to send (RTS) packet 122 and a clear to send (CTS) packet 124 which may be used to prevent collisions. Packet transmission based on RTS packets and CTS packets has a relatively large amount of overhead. The RTS packet 122 contains two octets for packet control, two octets for duration, six octets for receiver address, six octets for transmitter address, and four octets for a frame check sequence (FCS). Thus, there are a total of twenty octets in the RTS packet 122. The media access control (MAC) header of the RTS contains the frame control, duration, receiver address, and transmitter address. Similarly, the CTS packet contains two octets for frame control, two octets for duration, six octets for a receiver address, and four octets for FCS, for a total of 14 octets. The MAC header of the CTS packet 124 includes the frame control, duration, and receiver address. The CTS packet 122 and the RTS packet 124 are usually transmitted with the lowest modulation and coding scheme (MCS) level, because other stations close to the requesting station have to be able to decode these packets. Transmitting the packets using the lowest MCS level makes the payload size large. The overhead of the RTS packet 122 and the CTS packet 124 compared to the data packet is very high, which reduces the overall efficiency.

Figure 3 illustrates system 100 for uplink transmission in a wireless network that includes first station 104, second station 106, and access point 102. First station 104 and second station 106 cannot directly communicate with each other, because they are too far apart. However, both first station 104 and second station 106 can and do communicate with access point 102. Both first station 104 and second station 106 transmit a short RTS frame to access point 102. Access point 102 then responds, if the media channel is available, with a short CTS frame. Access point 102 will only grant a short CTS frame to one station at a time, so that only one station is transmitting to access point 102 at a time.

In uplink transmission, when a station has data to transmit, the station initially transmits a short RTS frame, which is a non-data packet indicating the station address and the access point address. When an access point receives a short RTS frame, and the access point is free to receive packets, the access point transmits a short CTS frame, which is also a non-data packet that includes the address of the station that sent the short RTS frame. An example of packet 130 that may be used as a short RTS frame and a short CTS frame is illustrated in Figure 4. In an example, packet 130 may consist of only a physical (PHY) layer preamble. Frame 130 includes a short training field (STF), a long training field (LTF), and a signaling field (SIG). The short training field and the long training field constitute the physical layer preamble. The short training field is used for initial frame synchronization, for coarse frequency offset compensation, and for automatic gain control (AGC) settings. Additionally, the long training field is used for fine frequency offset compensation and channel estimation.

In an example where frame 130 is a short request-to-send (RTS) frame, the signaling field contains 36 information bits. The signaling field may include a packet type field, an address of the target access point, an address of the requesting station, a duration field, and/or a cyclic redundancy check (CRC). The duration field may be equal to or greater than the expected duration of the current uplink packet transmission. The duration of the current uplink packet transmission may include the duration of the station's uplink transmission and additional times. The additional times may include the time for the access point's acknowledgment frame transmission, the time for the access point's short CTS frame, and time gaps between the transmissions. In an example, the duration field is one or more of the most significant bits (MSB) of the size of the expected duration of the current uplink packet transmission. Additionally, the signaling field of the short RTS frame may also include tail bits for Viterbi decoding. In an example, the duration field includes an estimated time for the whole uplink transmission process. The packet type field may indicate a specific message that this packet delivers, so that the access point can understand the signature field. In an example, the packet type field indicates that the packet is a short RTS frame. The packet type field may contain two parts, where the first part is a one bit indication that this signature field is for normal usage or as a special packet type, and a second part to indicate which special packet type the signature field represents. The second part may indicate the signature field is for a short clear-to-send (CTS) frame or a short RTS frame. In one example, the packet type field contains four bits, where one bit indicates if it is a special packet, and the remaining three bits indicate eight different types of special packets. The short RTS frame may be encoded in the lowest MCS level.

To indicate that a short RTS frame is used, the signaling field may, for example, contain one bit that indicates a special signature type. For example, if the special signature type contains a 1, that the signaling field is used for special purposes, for example as a short RTS frame, and if the special signature type contains a 0, the signaling field provides information for decoding the payload that follows this signaling field. In another example, a length field is defined in the signature field. A non-zero length field indicates a normal packet with a length of the value, while a zero length indicates that the signaling field is used for special purposes, for example as a short RTS frame. In one example, there may be multiple different types of special packets. For example, a special signature field might be used for a short acknowledgment or for a beacon packet.

Similarly, a signaling field of a short CTS frame includes a packet type field, an address of the target station, and a CRC. In an example, the packet type field indicates a specific message that this packet delivers, so that the receiver can understand the signature field. For example, the packet type field may indicate that the packet is a short CTS frame. The address of the target station may include all or part of an association identification (AID). Also, the address of the transmitting station in a short CTS frame may match the address of the requesting station in a corresponding short RTS frame.

The signaling field of the short CTS frame may also include information on the expected duration of the current uplink packet transmission, which is equal to or greater than the expected duration of the current uplink packet transmission. The duration of the current uplink packet transmission may include the station's uplink data packet transmission time and other related times, such as the access point's acknowledgment fame transmission time and the time gap between the transmissions. In an example, the duration field is one or more of the most significant bits of the size of the expected duration of the current uplink packet transmission. In another example, the duration field is the same as the duration field for a corresponding short RTS frame minus the time difference between short RTS frame transmission and short CTS frame transmission. The duration field may include an estimated time that a whole uplink transmission process is completed. Additionally, the signaling field of the short CTS frame may also include tail bits for Viterbi decoding. In an example, the short CTS frame is encoded in the lowest MCS level. In another embodiment, the signature field also includes information on the identity of the currently transmitting access point.

The packet type field may indicate a short CTS frame. For example, the signaling field may contain one bit that indicates a special signature type. When the one bit in the special signature type is a 1, it may indicate that the signaling field is used for special purposes, for example as a short CTS frame, and if the one bit in the special signature type is a 0, it indicates that the signaling field provides information for decoding the payload that follows this signaling field. Alternatively, a length field is defined in the signature field. A non-zero length field indicates a normal packet with a length of the value, while a zero length indicates a special signature field. There may be multiple different special types of packets. For example, a special signature field might be used for a short acknowledgment or for a beacon packet. In an example, the packet type field is set to a unique value that indicates a short CTS frame. In another example, the packet type field indicates if the access point intends to transmit its own packet with another unique ID. The packet type field may be set to yet another unique ID that indicates that every station can transmit uplink packets. In an example, the short CTS frame is encoded in the lowest MCS level.

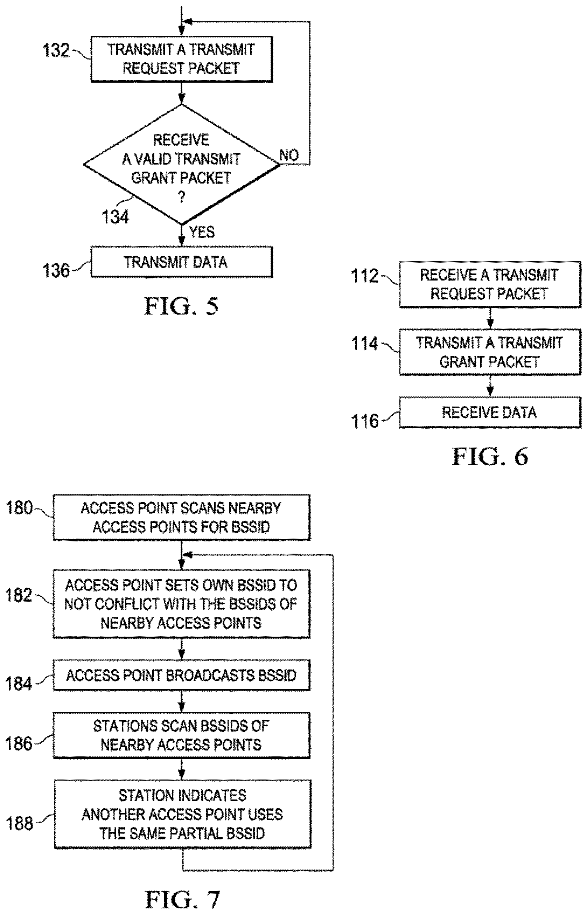

A method of uplink data transmission performed by a station is illustrated in Figure 5. Initially, in step 132, the station transmits a short RTS frame to the access point. Then, in step 134, the station attempts to receive a short CTS frame. The short RTS frame is operating as a transmission request packet, and the short CTS frame is operating as a transmission grant packet. If the station receives a valid short CTS frame, the station transmits data in step 136. In one example, a short CTS frame is valid only if the station address in the short RTS frame matches the station address of the short CTS frame. In another example, a short CTS frame is valid only if the duration field of the short CTS frame matches the duration field of the short RTS frame. A match does not require that the duration fields be identical, because there is a time difference between a short RTS packet transmission and a short CTS packet transmission, and a match accounts for this. Alternatively, the duration and the station address of both the short RTS frame and the short CTS frame must match for the short CTS frame to be valid. However, if the station does not receive a short CTS frame, the station transmits another short RTS frame.

Conversely, Figure 6 illustrates a method of uplink data reception performed by an access point. Initially, the access point receives a short RTS frame from a station in step 112. Then, in step 114, the access point transmits a short CTS frame to the requesting station. Finally, in step 116, the access point receives data from the station that was granted by the short RTS frame.

A traditional RTS packet includes six octets for a BSSID to identify the access points. However, six octets may not be necessary to uniquely identify the access point within range. An access point address may be generated in accordance with a portion of the BSSID to identify an access point. Figure 7 illustrates a method of setting a partial BSSID to identify an access point. When the access point turns on, in step 180, the access point scans other nearby access points that use the same carrier frequency, and the access point monitors the partial BSSIDs of these other access points. Then, in step 182, the access point sets its partial BSSID so that it does not conflict with the BSSIDs of the other nearby access points. Next, in step 184, the access point broadcasts its partial BSSID. For example, the partial BSSID might be broadcast periodically in a beacon packet. In step 186, nearby stations monitor the BSSIDs of nearby access points. If a station ascertains that more than one access point is using the same partial BSSID, the station notifies one of the access points in step 188. Then, the access point sets its partial BSSID to a different partial BSSID that does not conflict with the nearby access points in step 182.

Similarly, six octets are used for a station address for a traditional RTS packet or a traditional CTS packet. However, six octets are often not required to uniquely identify stations. In an example, a station address is generated in accordance with a portion of an AID to identify the stations within a range. In another example, a random number is used to identify the stations. If a random number is used for a station address, each time a station transmits a short RTS frame, the station address can be different, which might cause the access point to not be able to correctly identify with station corresponds to the short RTS frame. However, the access point will use the same station address to indicate the target station identity when it broadcasts a short CTS frame. If the station fails to receive a short CTS frame, if the received target station address is different from its own station address, or, optionally, if the received duration information is different from its own duration field, the station retransmits a short RTS frame using a different randomly generated address.

An access point might use a short CTS frame for other purposes, such as when the access point wants to transmit its own downlink packet, or to prevent stations from transmitting data packets. Additionally, an access point might use a short CTS frame to indicate that currently the wireless medium is idle and that every associated station can try to uplink data packets to prevent stations from waiting for an uplink packet. For these additional uses, specific bits in the packet type field might be allocated to indicate the usage or one or more of target station addresses are dedicated for these purposes.

In an embodiment, when a station wakes up from a sleep mode to an active state, and the station is ready to transmit uplink data, the stations waits to receive a packet from an access point. The packet might be an access point broadcast non-data packet indicating that the media is idle, an acknowledgement packet for transmission by another station, an access point management packet including upload scheduling information, a download traffic packet with information on packet duration including upload acknowledgement transmission time from the receiver, and that the current time is no sooner than the estimated end time of the upload acknowledgement transmission, or others. In an example, the access point's broadcast packet indicating that the media is idle is achieved using a short CTS frame.

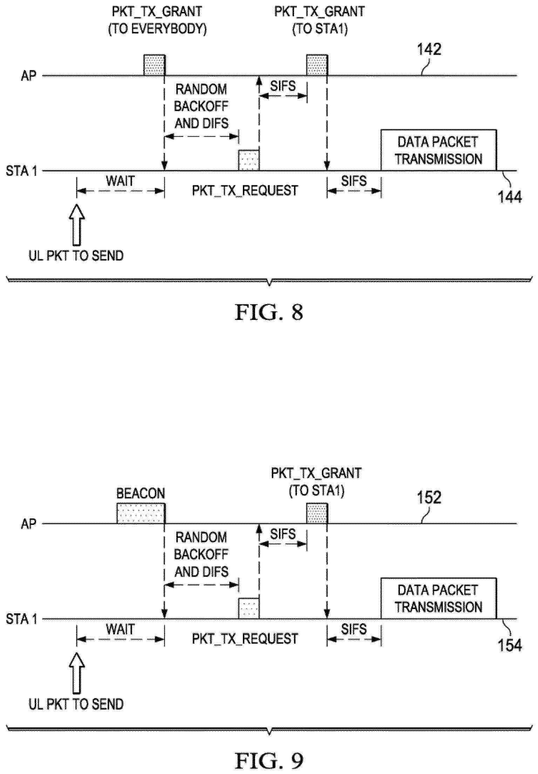

A method of uplink data transmission where a station waits for a short CTS frame that is broadcast to all stations by an access point is illustrated in Figure 8. The method includes messages from the station 144 and messages from the access point 142. Initially, when the station transitions from a sleep state to an active state, and has packets to uplink, the station waits until an access point broadcasts a short CTS frame. The station waits for a distributed coordinated function (DCF) interframe space (DIFS) plus a random backoff duration, and then sends a short RTS frame to the access point. After the access point receives the short RTS frame, the access point waits for a short interframe space (SIFS), and then sends a short CTS frame only to the requesting station. After the station receives the short CTS frame, the station waits for a SIFS, and then begins data packet transmission to the access point. If the transmission is successful, the station may receive an acknowledgement packet from the access point.

Similarly, Figure 9 illustrates a method of uplink data transmission where a station waits for a beacon signal from the access point. The method includes messages from the station 154 and messages from the access point 152. Initially, when the station transitions from a sleep state to an active state, and has packets to uplink, the station waits until the access point broadcasts a beacon packet. Upon receiving the beacon packet, the station waits for a DIFS plus a random backoff duration, and then sends a short RTS frame to the access point. After the access point receives the short RTS frame, the access point waits for a SIFS, and then sends a short CTS frame only to the requesting station. Then, after the station receives the short CTS frame, the station waits for a SIFS, and then begins data packet transmission to the access point. If the transmission is successful, the station may receive an acknowledgement packet from the access point.

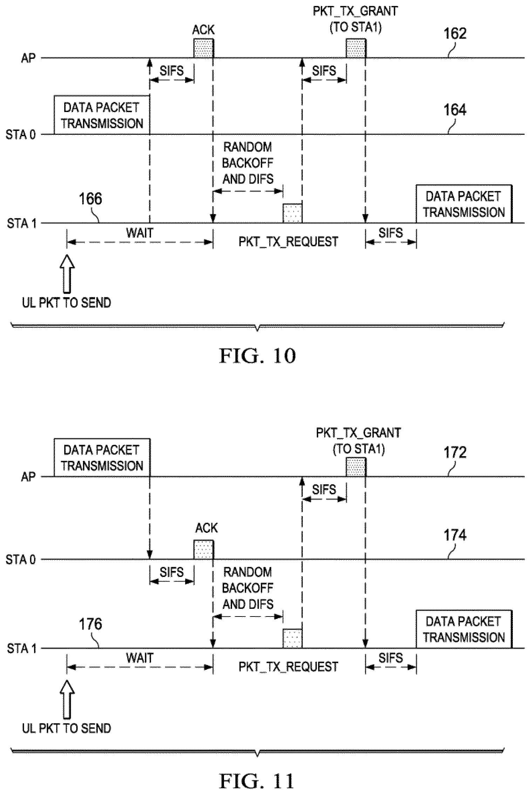

Figure 10 illustrates a method of uplink data transmission where a station waits for an acknowledgement message from an access point to another station. The method includes messages from the requesting station 166, messages from an already transmitting station 164, and messages from the access point 162. Initially, when the requesting station transitions from a sleep state to an active state, and has packets to upload, the already transmitting station is transmitting data packets to the access point. After the transmission of data packets ends, the access point waits for a SIFS, and broadcasts an acknowledgement packet. Also, when the requesting station receives the acknowledgement packet, it waits for a DIFS plus a random backoff duration, and transmits a short RTS frame to the access point. Then, when the access point receives the short RTS frame, it waits for a SIFS, and transmits a short CTS frame to the requesting station. Next, when the requesting station receives the short CTS fame, the requesting station waits for a SIFS, and then transmits data packets to the access point. If the transmission is successful, the access point may broadcast an acknowledgement packet.

Figure 11 illustrates a method of uplink data transmission where a requesting station waits for an acknowledge message from a transmitting station. The method includes messages from an access point 172, messages from an already transmitting station 174, and messages from a requesting station 176. Initially, the requesting station transitions from a sleep state to an alert state, and it has packets to transmit. Meanwhile, the access point transmits data to the already receiving station. After the transmission ends, the receiving station waits for a SIFS, and broadcasts an acknowledgement message. After receiving the acknowledgement message, the requesting station waits for a DIFS plus a random backoff duration, and sends a short RTS to the access point. Upon receiving the short RTS, the access point waits for a SIFS and sends a short CTS frame to the requesting station. The requesting station waits for a SIFS, and begins transmitting data to the access point. If the transmission is successful, the access point may broadcast an acknowledgement packet.

A station may, for example, receive a management packet including uplink scheduling information, and the current time is the time that is designated for the station to transmit. Also, the access point may change the allowed user group for uplink transmission for multiple consecutive transmissions of packets, indicating that currently the wireless medium is idle and the stations are allowed to transmit uplink data packets.

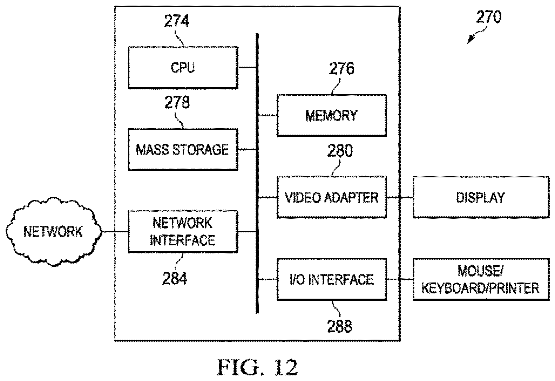

Figure 12 illustrates a block diagram of processing system 270 that may be used for implementing the devices and methods disclosed herein. Specific devices may utilize all of the components shown, or only a subset of the components, and levels of integration may vary from device to device. Furthermore, a device may contain multiple instances of a component, such as multiple processing units, processors, memories, transmitters, receivers, etc. The processing system may comprise a processing unit equipped with one or more input devices, such as a microphone, mouse, touchscreen, keypad, keyboard, and the like. Also, processing system 270 may be equipped with one or more output devices, such as a speaker, a printer, a display, and the like. The processing unit may include central processing unit (CPU) 274, memory 276, mass storage device 278, video adapter 280, and I/O interface 288 connected to a bus.

The bus may be one or more of any type of several bus architectures including a memory bus or memory controller, a peripheral bus, video bus, or the like. CPU 274 may comprise any type of electronic data processor. Memory 276 may comprise any type of system memory such as static random access memory (SRAM), dynamic random access memory (DRAM), synchronous DRAM (SDRAM), read-only memory (ROM), a combination thereof, or the like. In an embodiment, the memory may include ROM for use at boot-up, and DRAM for program and data storage for use while executing programs.

Mass storage device 278 may comprise any type of storage device configured to store data, programs, and other information and to make the data, programs, and other information accessible via the bus. Mass storage device 278 may comprise, for example, one or more of a solid state drive, hard disk drive, a magnetic disk drive, an optical disk drive, or the like.

Video adaptor 280 and I/O interface 288 provide interfaces to couple external input and output devices to the processing unit. As illustrated, examples of input and output devices include the display coupled to the video adapter and the mouse/keyboard/printer coupled to the I/O interface. Other devices may be coupled to the processing unit, and additional or fewer interface cards may be utilized. For example, a serial interface card (not pictured) may be used to provide a serial interface for a printer.

The processing unit also includes one or more network interface 284, which may comprise wired links, such as an Ethernet cable or the like, and/or wireless links to access nodes or different networks. Network interface 284 allows the processing unit to communicate with remote units via the networks. For example, the network interface may provide wireless communication via one or more transmitters/transmit antennas and one or more receivers/receive antennas. In an embodiment, the processing unit is coupled to a local-area network or a wide-area network for data processing and communications with remote devices, such as other processing units, the Internet, remote storage facilities, or the like.

While several embodiments have been provided in the present disclosure, it should be understood that the disclosed systems and methods might be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope of the attached claims.

## Claims

1. A method of communicating in a wireless network, the method comprising:
communicating, by a network element, a frame (130), which is a special, non-data packet consisting of:
a first short training field,
a first long training field, and
a first signaling field comprising
a first duration field, and
a first address of a station;
wherein the first signaling field further comprises a first packet type field,
wherein the first packet type field comprises:
a first part indicating the packet is a special type packet; and
a second part indicating a specific special packet type the packet is.

2. The method of claim 1, wherein the first packet type field indicates the packet is a short request-to-send (RTS) frame, and the first signaling field further comprises an address of a target access point.

3. The method of claim 1, wherein the first packet type field indicates the packet is a short acknowledgment packet.

4. The method of claim 1 or 2 or 3, wherein the first part consists of one bit, and wherein the second part comprises a plurality of bits.

5. The method of any one of claims 1-4, wherein the first signaling field further comprises a cyclic redundancy check (CRC).

6. The method of any one of claims 1-5, wherein the first signaling field further comprises tail bits.

7. The method of any one of claims 1-6, wherein the first signaling field contains fewer than 49 bits.

8. The method of any one of claims 1-7, wherein the network element is the station, and wherein communicating comprises receiving.

9. The method of any one of claims 1-7, wherein the network element is an access point, and wherein communication comprises transmitting.

10. The method of claim 9, further comprising:
receiving, by the access point, uplink data packets; and
transmitting, by the access point, an acknowledge packet.

11. A network element comprising:
a processor; and
a computer readable storage medium storing programming for execution by the processor, the programming including instructions to communicate, a frame, which is a special, non-data packet consisting of:
a first short training field,
a first long training field, and
a first signaling field comprising:
a first duration field, and
a first address of a station;
wherein the first signaling field further comprises a first packet type field,
wherein the first packet type field comprises:
a first part indicating the packet is a special type packet; and
a second part indicating a specific special packet type the packet is.

12. The network element of claim 11, wherein the first packet type field indicates the packet is a short request-to-send (RTS) frame, and the first signaling field further comprises an address of a target access point.

13. The network element of claim 11, wherein the first packet type field indicates the packet is a short acknowledgment packet.

14. The network element of claim 11 or 12 or 13, wherein the first part consists of one bit, and wherein the second part comprises a plurality of bits.

15. The network element of any one of claims 11-14, wherein the first signaling field further comprises a cyclic redundancy check (CRC).

16. The network element of any one of claims 11-15, wherein the first signaling field further comprises tail bits.

17. The network element of any one of claims 11-16, wherein the first signaling field contains fewer than 49 bits.

18. A computer program comprising program code for performing the method according to any of the claims 1 to 10, when the computer program is run on a computer.

## Patentansprüche

1. Verfahren zum Kommunizieren in einem drahtlosen Netzwerk, wobei das Verfahren Folgendes umfasst:
Kommunizieren, durch ein Netzwerkelement, eines Rahmens (130), der ein spezielles Nicht-Datenpaket ist
und besteht aus:
einem ersten kurzen Trainingsfeld,
einem ersten langen Trainingsfeld, und
einem ersten Signalisierungsfeld, das Folgendes umfasst:
ein erstes Dauerfeld, und
eine erste Adresse einer Station,
wobei das erste Signalisierungsfeld außerdem ein erstes Paketartfeld umfasst,
wobei das erste Paketartfeld Folgendes umfasst:
einen ersten Teil, der anzeigt, dass das Paket ein Paket einer speziellen Art ist; und
einen zweiten Teil, der eine spezifische Paketart anzeigt, die das Paket ist.

2. Verfahren nach Anspruch 1, wobei das erste Paketartfeld anzeigt, dass das Paket ein kurzer Sendeanforderungsrahmen (RTS, Request-to-Send) ist, und wobei das erste Signalisierungsfeld außerdem eine Adresse eines Zielzugangspunkts umfasst.

3. Verfahren nach Anspruch 1, wobei das erste Paketartfeld anzeigt, dass das Paket ein Paket mit kurzer Quittierung ist.

4. Verfahren nach Anspruch 1 oder 2 oder 3, wobei der erste Teil aus einem Bit besteht und wobei der zweite Teil aus mehreren Bits besteht.

5. Verfahren nach einem der Ansprüche 1-4, wobei das erste Signalisierungsfeld ferner eine zyklische Redundanzprüfung (CRC, Cyclic Redundancy Check) umfasst.

6. Verfahren nach einem der Ansprüche 1-5, wobei das erste Signalisierungsfeld ferner Tail-Bits umfasst.

7. Verfahren nach einem der Ansprüche 1-6, wobei das erste Signalisierungsfeld weniger als 49 Bits enthält.

8. Verfahren nach einem der Ansprüche 1-7, wobei das Netzwerkelement die Station ist, und wobei Kommunizieren Empfangen umfasst.

9. Verfahren nach einem der Ansprüche 1-7, wobei das Netzwerkelement ein Zugangspunkt ist und wobei Kommunizieren Senden umfasst.

10. Verfahren nach Anspruch 9, das ferner Folgendes umfasst:
Empfangen, durch den Zugangspunkt, von Uplink-Datenpaketen; und
Senden, durch den Zugangspunkt, eines Quittierungspakets.

11. Netzwerkelement, das Folgendes umfasst:
einen Prozessor; und
ein computerlesbares Speichermedium, das Programmierung zur Ausführung durch den Prozessor speichert, wobei die Programmierung Anweisungen zum Kommunizieren eines Rahmens umfasst, der ein spezielles Nicht-Datenpaket ist, das besteht aus:
einem ersten kurzen Trainingsfeld,
einem ersten langen Trainingsfeld, und
einem ersten Signalisierungsfeld, das Folgendes umfasst:
ein erstes Dauerfeld, und
eine erste Adresse einer Station,
wobei das erste Signalisierungsfeld außerdem ein erstes Paketartfeld umfasst,
wobei das erste Paketartfeld Folgendes umfasst:
einen ersten Teil, der anzeigt, dass das Paket ein Paket einer speziellen Art ist; und
einen zweiten Teil, der eine spezifische Paketart anzeigt, die das Paket ist.

12. Netzwerkelement nach Anspruch 11, wobei das erste Paketartfeld anzeigt, dass das Paket ein kurzer Sendeanforderungsrahmen (RTS, Request-to-Send) ist, und wobei das erste Signalisierungsfeld außerdem eine Adresse eines Zielzugangspunkts umfasst.

13. Netzwerkelement nach Anspruch 11, wobei das erste Paketartfeld anzeigt, dass das Paket ein Paket mit kurzer Quittierung ist.

14. Netzwerkelement nach Anspruch 11 oder 12 oder 13, wobei der erste Teil aus einem Bit besteht und wobei der zweite Teil aus mehreren Bits besteht.

15. Netzwerkelement nach einem der Ansprüche 11-14, wobei das erste Signalisierungsfeld ferner eine zyklische Redundanzprüfung (CRC, Cyclic Redundancy Check) umfasst.

16. Netzwerkelement nach einem der Ansprüche 11-15, wobei das erste Signalisierungsfeld ferner Tail-Bits umfasst.

17. Netzwerkelement nach einem der Ansprüche 11-16, wobei das erste Signalisierungsfeld weniger als 49 Bits enthält.

18. Computerprogramm, umfassend einen Programmcode zum Durchführen des Verfahrens nach einem der Ansprüche 1 bis 10, wenn das Computerprogramm auf einem Computer ausgeführt wird.

## Revendications

1. Procédé de communication dans un réseau sans fil, le procédé consistant à :
communiquer, par un élément de réseau, une trame (130), qui est un paquet spécial sans données, consistant en :
un premier champ court d'apprentissage,
un premier champ long d'apprentissage, et
un premier champ de signalisation comprenant :
un premier champ de durée, et
une première adresse d'une station ;
le premier champ de signalisation comprenant en outre un premier champ de type paquet, le premier champ de type paquet comprenant :
une première partie indiquant que le paquet est un paquet de type spécial ; et
une deuxième partie indiquant le type de paquet spécial spécifique correspondant au paquet.

2. Procédé selon la revendication 1, dans lequel le premier champ de type paquet indique que le paquet est une trame courte Demande pour émettre (RTS), et le premier champ de signalisation comprend en outre une adresse d'un point d'accès cible.

3. Procédé selon la revendication 1, dans lequel le premier champ de type paquet indique que le paquet est un paquet d'acquittement court.

4. Procédé selon la revendication 1 ou 2 ou 3, dans lequel la première partie consiste en un bit, et dans lequel la deuxième partie comprend une pluralité de bits.

5. Procédé selon l'une quelconque des revendications 1 à 4, dans lequel le premier champ de signalisation comprend en outre un contrôle de redondance cyclique (CRC).

6. Procédé selon l'une quelconque des revendications 1 à 5, dans lequel le premier champ de signalisation comprend en outre des bits d'extrémité.

7. Procédé selon l'une quelconque des revendications 1 à 6, dans lequel le premier champ de signalisation contient moins de 49 bits.

8. Procédé selon l'une quelconque des revendications 1 à 7, dans lequel l'élément de réseau est la station, et dans lequel la communication consiste en une réception.

9. Procédé selon l'une quelconque des revendications 1 à 7, dans lequel l'élément de réseau est un point d'accès, et dans lequel la communication consiste en une émission.

10. Procédé selon la revendication 9, consistant en outre à :
recevoir, par le point d'accès, des paquets de données en liaison montante ; et
transmettre, par le point d'accès, un paquet d'acquittement.

11. Élément de réseau comprenant :
un processeur ; et
un support de stockage lisible par ordinateur stockant un programme destiné à être exécuté par le processeur, le programme comprenant des instructions permettant de communiquer une trame qui est un paquet spécial sans données, consistant en :
un premier champ court d'apprentissage,
un premier champ long d'apprentissage, et
un premier champ de signalisation comprenant :
un premier champ de durée, et
une première adresse d'une station ;
le premier champ de signalisation comprenant en outre un premier champ de type paquet, le premier champ de type paquet comprenant :
une première partie indiquant que le paquet est un paquet de type spécial ; et
une deuxième partie indiquant le type de paquet spécial spécifique correspondant au paquet.

12. Élément de réseau selon la revendication 11, dans lequel le premier champ de type paquet indique que le paquet est une trame courte Demande pour émettre (RTS), et le premier champ de signalisation comprend en outre une adresse d'un point d'accès cible.

13. Élément de réseau selon la revendication 11, dans lequel le premier champ de type paquet indique que le paquet est un paquet d'acquittement court.

14. Élément de réseau selon la revendication 11 ou 12 ou 13, dans lequel la première partie consiste en un bit, et dans lequel la deuxième partie comprend une pluralité de bits.

15. Élément de réseau selon l'une quelconque des revendications 11 à 14, dans lequel le premier champ de signalisation comprend en outre un contrôle de redondance cyclique (CRC).

16. Élément de réseau selon l'une quelconque des revendications 11 à 15, dans lequel le premier champ de signalisation comprend en outre des bits d'extrémité.

17. Élément de réseau selon l'une quelconque des revendications 11 à 16, dans lequel le premier champ de signalisation contient moins de 49 bits.

18. Programme informatique contenant un code de programme permettant d'exécuter le procédé selon l'une quelconque des revendications 1 à 10 lorsque le programme informatique est exécuté sur un ordinateur.
